# EUROPEAN PATENT APPLICATION

(11) **EP 2 657 283 A1**
(43) Date of publication of application: **30.10.2013**
(21) Application number: 12002993.9
(22) Date of filing: 27.04.2012
(51) Int. Cl.: C08L 23/06, C08K 5/09, C08K 5/42, C08L 43/04

(54) **Catalyst masterbatch**

(71) Applicant: Borealis AG, 1220 Vienna (AT)
(72) Inventor: Anker, Martin, 425 43 Hisings Kärra (SE); Dahlén, Kristian, 444 60 Stora Höga (SE); Nylander, Perry, 412 61 Göteborg (SE); Fagrell, Ola, 444 45 Stenungsund (SE); Hellström Stefan, 413 22 Göteborg (SE)
(74) Representative: Kador & Partner

(57) **Abstract**

The present invention relates to a catalyst masterbatch for cross-linking a polyolefin comprising cross-linkable silicon-containing groups, such as hydrolysable silane containing groups, the catalyst masterbatch comprising
- a sulphonic acid and/or sulphonic anhydride;
- carboxylic acid groups and/or carboxylic anhydride groups ; and
- a carrier comprising a polyolefin.
wherein the weight ratio between the sum of the weight of sulphonic acids and sulphonic acid anhydrides and the sum of the weight of carboxylic acid groups and carboxylic acid anhydride groups is between 30 to 0.6. The present invention further relates to a polyolefin composition comprising
- a sulphonic acid and/or sulphonic anhydride;
- a carboxylic acid groups and/or carboxylic acid anhydride groups; and
- a polyolefin comprising cross-linkable silicon-containing groups wherein the weight ratio between the sum of the weight of sulphonic acids and sulphonic acid anhydrides and the sum of the weight of carboxylic acid groups and carboxylic acid anhydride groups is between 30 to 0.6. The present invention also relates to the use of the catalyst masterbatch according to the invention for cross-linking a polyolefin composition comprising
- a polyolefin having cross-linkable silicon-containing groups.

The present invention also relates to the Use of the masterbatch according to the invention in a cable layer.

## Description

The cross-linking of polyolefins comprising cross-linkable silicon-containing groups with catalysts is well-known in the art. It is inter alia described in EP 736 065. Usually suitable catalysts are added as so-called masterbatches, i.e. are compounded with a polymer ("carrier"). The masterbatch is then added to the polymer to be cross-linked. Thereby handling of the catalyst is facilitated.

Polyolefins comprising cross-linkable silicon-containing groups are suitable for several applications, particularly wire and cable applications and pipes.

It has been observed that in case the polymer to be cross-linked contains pigments the cross-linking efficiency is lowered, i.e. the obtained cross-linking degree is lower or a longer cross-linking time is required.

Of course it is possible to simply add more silanol condensation catalyst. However, this may be undesirable from a cost perspective. Furthermore, adding a higher amount of catalyst may cause exudation of the catalyst resulting in a loss of catalyst and it might also result in sticky pellets which can have an impact in the flowability. Furthermore, the catalyst is a corrosive substance. Hence, a possible exudation may also be a safety and health concern requiring protective clothing and/or equipment resistant to the acid leading to higher costs. There can also be a problem with high amount of acid that the system is overloaded and there will be a problem to add more additives, e.g. antioxidants, in the desired amount.

It has been surprisingly found that with a combination of
- a sulphonic acid and/or sulphonic acid anhydride; and
- carboxylic acid groups and/or carboxylic acid anhydride groups
an improved cross-linking performance can be obtained.

Therefore, the present invention provides a catalyst masterbatch for cross-linking a polyolefin comprising cross-linkable silicon-containing groups, the catalyst masterbatch comprising
- a sulphonic acid and/or sulphonic acid anhydride;
- carboxylic acid groups and/or carboxylic acid anhydride groups; and
- a carrier comprising a polyolefin
wherein the weight ratio between the sum of the weight of sulphonic acids and sulphonic acid anhydrides and the sum of the weight of carboxylic acid groups and carboxylic acid anhydride groups is between 30 to 0.6.

In the present invention the entirety of polymeric compounds present in the masterbatch is denoted carrier.

The carboxylic acid groups and/or carboxylic acid anhydride groups may be part of a polymer, i.e. covalently bound to a polymer chain, or part of a carboxylic acid and/or carboxylic acid not covalently bound to a polymer.

Unless otherwise mentioned to the contrary the weights of carboxylic acid and/or anhydride groups refer to the weight of the -COOH-groups and - C(=O)-O-C(=O)- groups in the masterbatch. The weight ratio between the sum of the weight of sulphonic acids and sulphonic acid anhydrides and the sum of the weight of carboxylic acid groups and carboxylic acid anhydride groups is also based on the weight of the -COOH-groups and - C(=O)-O-C(=O)- groups in the masterbatch.

With the above masterbatch the cross-linking efficiency is improved while simultaneously exudation of the sulphonic acid and/or sulphonic acid anhydride is avoided or at least significantly reduced.

As already stated above, weight ratio between the sum of the weight of sulphonic acids and sulphonic acid anhydrides and the sum of the weight of carboxylic acid groups and carboxylic acid anhydride groups is between 30 to 0.6.

Preferably, the weight ratio between the sum of the weights of sulphonic acids and sulphonic acid anhydrides and the sum of the weights of carboxylic acid groups and carboxylic acid anhydride groups is not more than 15, more preferably not more than 10.0.

The weight ratio between the sum of the weight of sulphonic acids and sulphonic acid anhydrides and the sum of the weight of carboxylic acid groups and carboxylic acid anhydride groups is preferably at least 1., more preferably at least 1.3.

The sum of the weights of sulphonic acids and sulphonic acid anhydrides in the catalyst masterbatch is preferably 20 wt.% or less based on the total weight of the catalyst masterbatch, more preferable 15 % or less and most preferably 10 wt.% or less based on the total weight of the catalyst masterbatch. In a preferred embodiment sum of the weights of sulphonic acids and sulphonic acid anhydrides in the catalyst masterbatch is 6.0 wt.% or less.

Usually the sum of the weights of sulphonic acids and sulphonic acid anhydrides in the catalyst masterbatch is at least 0.5 wt.% based on the total weight of the catalyst masterbatch, preferably at least 1.0 wt.% based on the total weight of the catalyst masterbatch.

The sum of the weights of carboxylic acid groups and carboxylic acid anhydride groups is preferably 0.24 wt.% or more based on the total weight of the catalyst masterbatch, more preferably 0.32 wt.% or more based on the total weight of the catalyst masterbatch and most preferably 0.45 wt.% or more based on the total weight of the catalyst masterbatch.

Usually the sum of the weight of carboxylic acid groups and carboxylic acid anhydride groups is 3.0 wt.% or less based on the total weight of the catalyst masterbatch, preferably 2.0 wt.% or less based on the total weight of the catalyst masterbatch.

The sum of the weights of sulphonic acids, sulphonic acid anhydrides, carboxylic acid groups and carboxylic acid anhydride groups is preferably between 0.5 wt.% and 15.0 wt.% based on the total weight of the catalyst masterbatch, more preferably the sum of the weights of sulphonic acids, sulphonic acid anhydrides, carboxylic acid groups and carboxylic acid anhydride groups is preferably between 1.0 wt.% and 7.0 wt.% based on the total weight of the catalyst masterbatch.

Preferably the sulphonic acid is an aromatic organic sulphonic acid comprising the structural element (II)

Ar(SO₃H)ₓ (II)

with Ar being an aryl group which may be substituted or non-substituted, and x being at least 1,

even more preferably, the sulphonic acid is selected from the following compounds
(i) an alkylated naphthalene monosulfonic acid substituted with 1 to 4 alkyl groups wherein each alkyl group is a linear or branched alkyl with 5 to 40 carbon atoms with each alkyl group being the same or different and wherein the total number of carbon atoms in the alkyl groups is in the range of 10 to 80 carbon atoms;
(ii) an arylalkyl sulfonic acid wherein the aryl group is phenyl or naphthyl and is substituted with 1 to 4 alkyl groups wherein each alkyl group is a linear or branched alkyl with 5 to 40 carbon atoms with each alkyl group being the same or different and wherein the total number of carbon atoms in the alkyl groups is in the range of 12 to 80;
(iii) an alkylated aryl disulfonic acid selected from the group consisting of the structure (III): 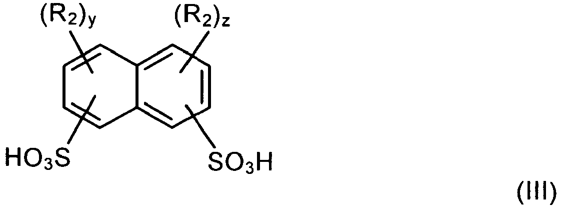 or the structure (IV): 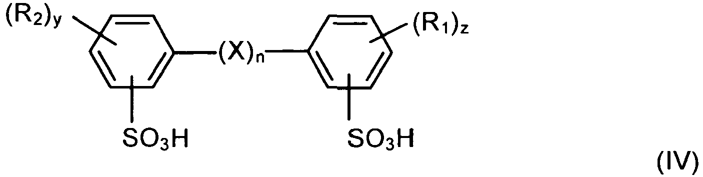 wherein each of R¹ and R² are the same or different and is a linear or branched alkyl group with 6 to 16 carbon atoms, y is 0 to 3, z is 0 to 3 with the proviso that y + z is 1 to 4, n is 0 to 3, X is a divalent moiety selected from the group consisting of -C(R³)(R⁴)-, wherein each of R³ and R⁴ is H or independently a linear or branched alkyl group of 1 to 4 carbon atoms and n is 1; - C(=O)-, wherein n is 1; -S-, wherein n is 1 to 3 and -S(O)₂-, wherein n is 1.

Even more preferably, the sulphonic acid is selected from compounds of group (ii) and most preferably, in the sulphonic acid of group (ii) the aryl group is phenyl and is substituted with 1 to 2 alkyl groups wherein each alkyl group is a linear or branched alkyl with 8 to 20 carbon atoms with each alkyl group being the same or different and wherein the total number of carbon atoms in the alkyl groups is in the range of 12 to 35.

The sulphonic acid anhydride is preferably an anhydride of one or more of the above sulphonic acids including the preferred embodiments thereof. Thus, the residues present on the sulphonic acid anhydride group may be identical or different, preferably are identical. In case of multifunctional sulphonic acids, the corresponding anhydride may be a cyclic anhydride, i.e. the residues present on the sulphonic acid anhydride group originate from the same molecule.

Preferably the masterbatch comprises a sulphonic acid, more preferably, the masterbatch comprises a sulphonic acid, but does not comprise a sulphonic acid anhydride.

In the present invention the carboxylic acid and/or carboxylic acid anhydride may be physically mixed with the carrier, the sulphonic acid and/or sulphonic acid anhydride and, optionally further components. In such a case the carboxylic acid and/or carboxylic acid anhydride is not covalently bound to a polymer.

In this case, preferably the carboxylic acid contains the following structural element (I)

HOOC-R¹ (I)

wherein R₁ is a C₅ to C₁₀₀ hydrocarbyl group, optionally containing heteroatoms, preferably R¹ is a C₆ to C₂₅ hydrocarbyl group, optionally containing heteroatoms.

In R¹ the heteroatoms may be oxygen and may be present in the form of further -COOH-groups. Hence, the carboxylic acid may comprise more than one -COOH-groups. Usually the carboxylic acid does not comprise more than five -COOH-groups, preferably not more than three -COOH-groups and most preferably not more than two -COOH-groups. In a preferred embodiment R¹ does not comprise any -COOH-groups.

In case heteroatoms are present in R¹ the heteroatoms are preferably selected from N, S, P and O, more preferably are selected from N and O, even more preferably are 0 and most preferably the heteroatoms are O and only present in the form of one or more -COOH-group(s).

In case heteroatoms are present in R¹ usually not more than ten heteroatoms are present in R¹, preferably, not more than five heteroatoms are present in R¹ and most preferably not more than two heteroatoms are present in R¹.

However, preferably R¹ does not contain any heteroatoms.

Furthermore, the carboxylic acid is usually free of aromatic structures.

The carboxylic acid anhydride is preferably an anhydride of one or more of the above carboxylic acids including the preferred embodiments thereof. Thus, the residues present on the carboxylic acid anhydride group may be identical or different, preferably are identical. In case of multifunctional carboxylic acids, the corresponding anhydride may be a cyclic anhydride, i.e. the residues present on the carboxylic acid anhydride group originate from the same molecule.Alternatively the carboxylic acid groups and/or carboxylic acid anhydride groups may be part of a polymer, e.g. the polyolefin comprised in the carrier. Hence, in such a case the carboxylic acid groups and/or carboxylic acid anhydride groups are covalently bond to the polymer, e.g. the polyolefin comprised in the carrier.

This is described further below, first preferred features of the polyolefin(s) comprised in the carrier is described.

As already stated above, the masterbatch further comprises a carrier which comprises a polyolefin. The carrier may also contain two or more different polyolefins. Usually not more than four, preferably, not more than three different polyolefins are present in the carrier. In a preferred embodiment only one polyolefin is present in the masterbatch.

The carrier preferably comprises polyolefins in an amount of at least 90 wt.%, more preferably at least 95 wt.% and most preferably the carrier consists of polyolefins. Particularly preferred is a carrier comprising one polyolefin in the amounts given above, even more preferred is a carrier consisting of one polyolefin.

Preferably the polyolefin comprised in the carrier is an ethylene homo- or copolymer or propylene homo- or copolymer. In case more than one polyolefin is comprised in the carrier preferably at least one of said polyolefins is an ethylene homo- or copolymer or propylene homo- or copolymer, more preferably all polyolefins are ethylene homo- or copolymers or propylene homo- or copolymers and most preferably all polyolefins are ethylene homo- or copolymers.

Moreover, the polymerisation of olefin, e.g. ethylene, may be implemented in the presence of one or more other comonomers which can be copolymerised with the olefin, e.g. ethylene. Such comonomers include (a) vinyl carboxylate esters, such as vinyl acetate and vinyl pivalate, (b) alpha-olefins, such as propene, 1-butene, 1-hexane, 1-octene and 4-methyl-1-pentene, (c) (meth)acrylates, such as methyl(meth)acrylate, ethyl(meth)acrylate and butyl(meth)acrylate, (d) (meth)acrylic acid derivatives, such as (meth)acrylonitrile and (meth)acrylic amide, (e) vinyl ethers, such as vinyl methyl ether and vinyl phenyl ether, and (f) aromatic vinyl compounds, such as styrene and alpha-ethyl styrene.

Amongst these comonomers, vinyl esters of monocarboxylic acids having 1-4 carbon atoms, such as vinyl acetate, and (meth)acrylate of alcohols having 1-4 carbon atoms, such as methyl(meth)acrylate, are preferred.

The term "(meth)acrylic acid" is intended to embrace both acrylic acid and methacrylic acid.

Especially preferred comonomers are butyl acrylate, ethyl acrylate and methyl acrylate.

Usually not more than two comonomers besides the olefin, e.g. ethylene, are present in the polyolefin comprised in the carrier, preferably not more than one comonomer besides the olefin, e.g. ethylene are present in the polyolefin comprised in the carrier. In a preferred embodiment the polyolefin is an ethylene copolymer, more preferably an ethylene copolymer comprising butyl acrylate, ethyl acrylate and/or methyl acrylate as comonomer.

If present, the content of comonomers (a) to (f) may amount to 70 wt% of the polyolefin(s) comprised in the carrier, preferably about 0.5 to 35 wt%, most preferably about 1 to 30 wt% of the polyolefin(s) comprised in the carrier.

In case one or more ethylene homo- or copolymers are comprised in the carrier, the MFR₂ of the carrier (ISO 1133, 2.16 kg, 190°C) is between 0.1 to 50 g/10 min, preferably between 1 to 10 g/10 min.

In case one or more propylene homo- or copolymers are comprised in the carrier, the MFR of the carrier (ISO 1133, 2.16 kg, 230°C) is between 1 to 40 g/10 min, preferably between 3 to 30 g/10 min.

In case the carboxylic acid groups and/or carboxylic acid anhydride groups are part of a polymer, the carboxylic acid groups and/or carboxylic acid anhydride groups may be introduced into the polymer by grafting or by copolymerisation.

In the following preferred features in case the carboxylic acid groups and/or carboxylic acid anhydride groups are introduced into the polymer by grafting are described.

As grafting agent, any such agent can be used which is known to be suitable for this purpose by the person skilled in the art.

Preferably, the grafting agent is an unsaturated carboxylic acid or a derivative thereof such as an anhydride, an ester and a salt (both metallic or non-metallic). Usually the grafting agent does not contain more than 20 carbon atoms.

Preferably, the unsaturated group is in conjugation with the carboxylic group. Hence, preferably, the grafting agent contains the structural element C=C-COO.

Examples of suitable grafting agents are acrylic acid, methacrylic acid, fumaric acid, maleic acid, nadic acid, citraconic acid, itaconic acid, crotonic acid, and their anhydrides, metal salts, esters amides or imides whereby maleic acid its derivatives such as maleic anhydride are preferred, and maleic anhydride is particularly preferred.

Grafting can be carried out by any process known in the art such as grafting in an melt without a solvent or in solution or dispersion or in a fluidised bed. Preferably, grafting is performed in a heated extruder or mixer as e.g. described in US 3,236,917, US 4,639,495, US 4,950,541 or US 5,194509. The content of these documents is herein included by reference. Preferably, grafting is carried out in a twin screw extruder such as described in US 4,950,541.

Grafting may be carried out in the presence or absence of a radical initiator but is preferably carried out in the presence of a radical initiator such as an organic peroxide, organic perester or organic hydroperoxide.

The amount of said grafting agent added to the polymer before grafting is preferably from 0.01 to 3.0 weight %, more preferably from 0.03 to 1.5 weight % of the polymer the grafting agent is applied on.

The carboxylic acid groups and/or carboxylic acid anhydride groups may alternatively be introduced into the polymer by copolymerisation. This is inter alia described in US 3 723 397.

Generally the same compounds used for grafting may also be used for copolymerisation. In such a case the above polymerisation of the polyolefin(s) comprised in the carrier is implemented in the presence of a comonomer comprising carboxylic acid groups and/or carboxylic acid anhydride groups.

Preferably, the comonomer used for copolymerisation is an unsaturated carboxylic acid or a derivative thereof such as an anhydride, an ester and a salt (both metallic or non-metallic). Usually the comonomer does not contain more than 20 carbon atoms.

Preferably, the unsaturated group is in conjugation with the carboxylic group. Hence, preferably, the comonomer contains the structural element C=C-COO.

Examples of suitable comonomers include acrylic acid, methacrylic acid, fumaric acid, maleic acid, nadic acid, citraconic acid, itaconic acid, crotonic acid, and their anhydrides, metal salts, esters amides or imides whereby maleic acid its derivatives such as maleic anhydride are preferred, and maleic anhydride is particularly preferred.

In case the carboxylic acid groups and/or carboxylic acid anhydride groups are introduced into the polymer by grafting or by copolymerisation the carboxylic acid groups and/or carboxylic acid anhydride groups are present in at least one of the polymers present in the carrier, preferably, they are present in at least one of the polyolefins present in the carrier. The carboxylic acid groups and/or carboxylic acid anhydride groups may also be present in two or more different polymers present in the masterbatch or even all polymers present in the masterbatch.

It is also possible that two or more different carboxylic acid groups and/or carboxylic acid anhydride groups are present in the polymers, e.g. polyolefins, of the masterbatch. In such a case all carboxylic acid groups and/or carboxylic acid anhydride groups maybe present in one polymer, e.g. polyolefin, only. Alternatively in case two or more different polymers, e.g. polyolefins, are present in the masterbatch one type of carboxylic acid group and/or carboxylic acid anhydride group maybe present in one polymer, e.g. polyolefin, and another type of carboxylic acid group and/or carboxylic acid anhydride group may be present in another polymer, e.g. polyolefin, of the masterbatch or all of the carboxylic acid groups and/or carboxylic acid anhydride groups are present in all polymers, e.g. polyolefins, of the masterbatch.

In case the carboxylic acid groups and/or carboxylic acid anhydride groups are covalently bound to a polymer, they are preferably bound to a polyolefin, preferably polyethylene.

Preferably the masterbatch comprises carboxylic acid groups, more preferably, the masterbatch comprises carboxylic acid groups, but does not comprise carboxylic acid anhydride groups.

However, in the masterbatch preferably, the carboxylic acid groups and/or carboxylic acid anhydride groups are not covalently bound to a polymer. Hence, preferably, in the present invention the carboxylic acid and/or carboxylic acid anhydride is physically mixed with the carrier, the sulphonic acid and/or sulphonic acid anhydride and, optionally further components.

Thus, in a preferred embodiment, the present invention provides a catalyst masterbatch for cross-linking a polyolefin comprising cross-linkable silicon-containing groups, the catalyst masterbatch comprising
- a sulphonic acid and/or sulphonic acid anhydride;
- a carboxylic acid and/or carboxylic acid anhydride; and
- a carrier comprising a polyolefin.
wherein the weight ratio between the sum of the weight of sulphonic acids and sulphonic acid anhydrides and the sum of the weight of carboxylic acid and/or carboxylic acid anhydride is between 2.0 to 0.5.

In this preferred embodiment the weight of the carboxylic acid and/or carboxylic acid anhydride is taken as a whole.

Hence, as an illustrative examples, in case 1 g of toluol-sulphonic acid and 1 g of 4-methylbenzoic acid (p-toluic acid) the weight ratio between sulphonic acid and the sum of the weight of carboxylic acid and carboxylic acid anhydrides is 1.0.

Unless otherwise mentioned to the contrary, in the following preferred features of this preferred embodiment are described.

Preferably, the weight ratio between the sum of the weight of sulphonic acids and sulphonic acid anhydrides and the sum of the weight of carboxylic acids and carboxylic acid anhydride is not more than 1.5, more preferably not more than 1.0.

The weight ratio between the sum of the weight of sulphonic acids and sulphonic acid anhydrides and the sum of the weight of carboxylic acids and carboxylic acid anhydrides is preferably at least 0.2, more preferably at least 0.3.

Usually the sum of the weight of carboxylic acids and carboxylic acid anhydrides is 10 wt.% or less based on the total weight of the catalyst masterbatch, preferably 7.5 wt.% or less based on the total weight of the catalyst masterbatch.

The sum of the weights of sulphonic acids, sulphonic acid anhydrides, carboxylic acids and carboxylic acid anhydrides is preferably between 2 wt.% and 20 wt.% based on the total weight of the catalyst masterbatch more preferably sum of the weights of sulphonic acids, sulphonic acid anhydrides, carboxylic acids and carboxylic acid anhydrides is preferably between 3 wt.% and 15 wt.% based on the total weight of the catalyst masterbatch.

Preferably, the masterbatch comprises a sulphonic acid, more preferably, the masterbatch comprises a sulphonic acid, but does not comprise a sulphonic acid anhydride.

Preferably the masterbatch comprises a carboxylic acid, more preferably, the masterbatch comprises a carboxylic acid, but does not comprise carboxylic acid anhydride.

As already stated above, the masterbatch further comprises a carrier which comprises a polyolefin. The carrier may also contain two or more different polyolefins. Usually not more than four, preferably, not more than three different polyolefins are present in the carrier. In a preferred embodiment only one polyolefin is present in the masterbatch.

The carrier preferably comprises polyolefins in an amount of at least 90 wt.%, more preferably at least 95 wt.% and most preferably the carrier consists of polyolefins. Particularly preferred is a carrier comprising one polyolefin in the amounts given above, even more preferred is a carrier consisting of one polyolefin.

Preferably the polyolefin comprised in the carrier is an ethylene homo- or copolymer or propylene homo- or copolymer. In case more than one polyolefin is comprised in the carrier preferably at least one of said polyolefins is an ethylene homo- or copolymer or propylene homo- or copolymer, more preferably all polyolefins are ethylene homo- or copolymers or propylene homo- or copolymers and most preferably all polyolefins are ethylene homo- or copolymers.

Moreover, the polymerisation of olefin, e.g. ethylene, may be implemented in the presence of one or more other comonomers which can be copolymerised with the olefin, e.g. ethylene. Such comonomers include (a) vinyl carboxylate esters, such as vinyl acetate and vinyl pivalate, (b) alpha-olefins, such as propene, 1-butene, 1-hexane, 1-octene and 4-methyl-1-pentene, (c) (meth)acrylates, such as methyl(meth)acrylate, ethyl(meth)acrylate and butyl(meth)acrylate, (d) (meth)acrylic acid derivatives, such as (meth)acrylonitrile and (meth)acrylic amide, (e) vinyl ethers, such as vinyl methyl ether and vinyl phenyl ether, and (f) aromatic vinyl compounds, such as styrene and alpha-ethyl styrene.

Amongst these comonomers, vinyl esters of monocarboxylic acids having 1-4 carbon atoms, such as vinyl acetate, and (meth)acrylate of alcohols having 1-4 carbon atoms, such as methyl(meth)acrylate, are preferred.

The term "(meth)acrylic acid" is intended to embrace both acrylic acid and methacrylic acid.

Especially preferred comonomers are butyl acrylate, ethyl acrylate and methyl acrylate.

Usually not more than two comonomers besides the olefin, e.g. ethylene, are present in the polyolefin comprised in the carrier, preferably not more than one comonomer besides the olefin, e.g. ethylene are present in the polyolefin comprised in the carrier. In a preferred embodiment the polyolefin is an ethylene copolymer, more preferably an ethylene copolymer comprising butyl acrylate, ethyl acrylate and/or methyl acrylate as comonomer.

If present, the content of comonomers (a) to (f) may amount to 70 wt% of the polyolefin(s) comprised in the carrier, preferably about 0.5 to 35 wt%, most preferably about 1 to 30 wt% of the polyolefin(s) comprised in the carrier.

In case one or more ethylene homo- or copolymers are comprised in the carrier, the MFR₂ of the carrier (ISO 1133, 2.16 kg, 190°C) is between 0.1 to 50 g/10 min, preferably between 1 to 10 g/10 min.

In case one or more propylene homo- or copolymers are comprised in the carrier, the MFR of the carrier (ISO 1133, 2.16 kg, 230°C) is between 1 to 40 g/10 min, preferably between 3 to 30 g/10 min.

Unless otherwise mentioned to the contrary, in the following preferred features of all embodiments of the present invention are described.

In the present invention a "Lewis acid" denotes a molecular entity (and the corresponding chemical species) that is an electron-pair acceptor and therefore able to react with a Lewis base to form a Lewis adduct, by sharing the electron pair furnished by the Lewis base.

In the present invention a "Brønsted acid" denotes a molecular entity capable of donating a hydron (proton) to a base, (i.e. a 'hydron donor') or the corresponding chemical species.

Preferably, the masterbatch according to the invention does not contain any acids besides Brønsted acids.

Hence, the masterbatch according to the invention is free of compounds which are Lewis acids but not simultaneously Bronsted acids.

The catalyst masterbatch may further comprise:
- silica and/or filler.

If present, the sum of silica and filler is preferably present in an amount of at least 0.5 wt.% based on the masterbatch, more preferably in an amount of at least 1.0 wt.% of the masterbatch.

The filler can be of any type of talc, mica, montmorillonite, wollastonite, bentonite, silica, halloysite, kaolinite and other phyllosilicates.

Preferably, the catalyst masterbatch comprises silica and more preferably, the catalyst masterbatch comprises silica but does not comprise a filler.

Preferably, the silica has a particle size below 20 micrometer and a specific surface area of more than 1 m²/g and less than 600 m²/g (BET).

If present, the sum of silica and filler is preferably not more than 20.0 wt.% based on the masterbatch, more preferably not more than 10.0 wt.% of the masterbatch and most preferred not more than 5 wt%.

The present invention is further directed to a polyolefin composition comprising
- a sulphonic acid and/or anhydride;
- carboxylic acid groups and/or anhydride groups; and
- a polyolefin comprising cross-linkable silicon-containing groups wherein the weight ratio between the sum of the weight of sulphonic acids and sulphonic acid anhydrides and the sum of the weight of carboxylic acid groups and carboxylic acid anhydride groups is between 30 to 0.6.

Usually, the sulphonic acid and/or anhydride and the carboxylic acid groups and/or anhydride groups are part of the masterbatch as described above. Hence, preferably, the polyolefin composition is comprising
- a catalyst masterbatch according to any of the embodiments of the invention.
   and
- a polyolefin comprising cross-linkable silicon-containing groups.

The polyolefin composition is preferably further comprising
- a pigment.

If present, the pigment is preferably present in an amount of at least 0.2 wt.% based on the polyolefin composition, preferably at least 0.5 wt.% based on the polyolefin composition.

If present, the pigment is preferably present in an amount of not more than 3.0 wt.% based on the polyolefin composition, preferably not more than 2.0 wt.% based on the polyolefin composition.

Most pigments contain a dye responsible for the colour and an agent to make the pigmented composition more opaque, in the following denoted "opaque agent". The dye usually selectively reflects and absorbs certain wavelengths of visible light, i.e. within the range of 380 nanometers to 780 nm.

The opaque agent is usually selected from TiO₂ and/or CaCO₃, most preferred TiO₂. TiO₂ is also used to give the pigment brightness. CaCO₃ is often used in mixtures with titanium dioxide pigment much for cost reduction.

In case the polymer composition should be more opaque only, it is possible to use an opaque agent as pigment only.

Hence, the pigment preferably comprises or consists of an opaque agent.

In a preferred embodiment the pigment consists of the opaque agent. Preferably, the opaque agent is selected from titanium dioxide and/or CaCO₃ and most preferred the opaque agent is titanium dioxide.

The composition of the present invention comprises a polyolefin, e.g. polyethylene, having cross-linkable silicon-containing groups.

The cross-linkable silicon-containing groups may be introduced into the polyolefin by copolymerisation of olefin, e.g. ethylene, monomers with comonomers having a silicon-containing group or by grafting, i.e. by chemical modification of the polymer by addition of a compound having a silicon-containing group mostly in a radical reaction. Both techniques are well known in the art.

The cross-linkable silicon-containing groups are preferably hydrolysable silane containing groups.

Preferably, the polyolefin having cross-linkable silicon-containing groups is obtained by copolymerisation. The copolymerisation is preferably carried out with a comonomer having a silicon-containing groups, the comonomer being represented by the formula

R¹SIR²_{q}Y_{3-q}

wherein
R¹ is an ethylenically unsaturated hydrocarbyl, hydrocarbyloxy or (meth)acryloxy hydrocarbyl group, preferably an ethylenically unsaturated hydrocarbyl group, more preferably an vinyl group
R² is a hydrocarbyl group, preferably a C₁ to C₂₀ hydrocarbyl group, more preferably a C₁ to C₁₀ hydrocarbyl group;
Y which may be the same or different, is a hydrolysable organic group, such as R³-O-, R³-(COO)-, (R³)ₓH₂₋ₓN- whereby x = 1 or 2 and R³ is a C₁ to C₂₀ hydrocarbyl group, more preferably a C₁ to C₁₀ hydrocarbyl group;
q is 0, 1 or 2.

In the present invention hydrocarbyl groups are univalent groups formed by removing a hydrogen atom from a hydrocarbon, e.g. ethyl, phenyl.

Special examples of the compound having a silicon-containing group are those wherein
R¹ is vinyl, allyl, isopropenyl, butenyl, cyclohexanyl or gamma-(meth)acryloxy propyl;
Y is methoxy, ethoxy, formyloxy, acetoxy, propionyloxy or an alkyl-or arylamino group; and
R², if present, is a methyl, ethyl, propyl, decyl or phenyl group.

A preferred compound having a silicon-containing group is represented by the formula

CH₂=CHSi(OA)₃

wherein A is a hydrocarbyl group having 1-8 carbon atoms, preferably 1-4 carbon atoms.

The most preferred compounds are vinyl-trimethoxysilane, vinyl-bismethoxyethoxysilane, vinyl-triethoxysilane, gamma-(meth)acryloxypropyltrimethoxysilane, gamma(meth)acryloxypropyltriethoxysilane, and vinyl triacetoxysilane.

The copolymerisation of olefin, e.g. ethylene, and the compound having cross-linkable silicon-containing groups may be carried out under any suitable conditions resulting in the copolymerisation of the two monomers. Suitable methods are described in EP1923404.

Moreover, the copolymerisation of olefin, e.g. ethylene, and the compound having cross-linkable silicon-containing groups may be implemented in the presence of one or more other comonomers which can be copolymerised with the two monomers. Such comonomers include (a) vinyl carboxylate esters, such as vinyl acetate and vinyl pivalate, (b) alpha-olefins, such as propene, 1-butene, 1-hexane, 1-octene and 4-methyl-1-pentene, (c) (meth)acrylates, such as methyl(meth)acrylate, ethyl(meth)acrylate and butyl(meth)acrylate, (d) olefinically unsaturated carboxylic acids, such as (meth)acrylic acid, maleic acid and fumaric acid, (e) (meth)acrylic acid derivatives, such as (meth)acrylonitrile and (meth)acrylic amide, (f) vinyl ethers, such as vinyl methyl ether and vinyl phenyl ether, and (g) aromatic vinyl compounds, such as styrene and alpha-ethyl styrene.

Amongst these comonomers, vinyl esters of monocarboxylic acids having 1-4 carbon atoms, such as vinyl acetate, and (meth)acrylate of alcohols having 1-4 carbon atoms, such as methyl(meth)acrylate, are preferred.

The term "(meth)acrylic acid" is intended to embrace both acrylic acid and methacrylic acid.

Especially preferred comonomers are butyl acrylate, ethyl acrylate and methyl acrylate.

Usually not more than two comonomers besides the olefin, e.g. ethylene, and the compound having cross-linkable silicon-containing groups are present in the polyolefin comprising cross-linkable silicon-containing groups), preferably not more than one comonomer besides the olefin, e.g. ethylene and the compound having cross-linkable silicon-containing groups are present in the polyolefin comprising cross-linkable silicon-containing groups. In a preferred embodiment no further comonomer besides olefin, e.g. ethylene and the compound having cross-linkable silicon-containing groups are present in the polyolefin comprising cross-linkable silicon-containing groups.

If present, the content of comonomers different from the compound having cross-linkable silicon-containing groups may amount to 70 wt% of the polyolefin comprising cross-linkable silicon-containing groups, preferably about 0.5 to 35 wt%, most preferably about 1 to 30 wt% of the polyolefin comprising cross-linkable silicon-containing groups.

If using a graft polymer, this may have been produced e.g. by any of the two methods described in US 3,646,155 and US 4,117,195, respectively.

The polyolefin comprising cross-linkable silicon-containing groups preferably contains 0.001 to 15 wt% of the compound having cross-linkable silicon-containing groups, more preferably 0.01 to 5 wt% of the compound having cross-linkable silicon-containing groups and most preferably 0.1 to 2 wt% of the compound having cross-linkable silicon-containing groups.

The present invention is further directed to the use of the catalyst masterbatch according to the invention for cross-linking a polyolefin composition comprising
- a polyolefin having cross-linkable silicon-containing groups.

Preferably, the polyolefin composition is further comprising
- a pigment.

The present invention is further directed to the use of the masterbatch in a cable layer, preferably a cable insulation layer.

Such an insulation layer usually contains less than 2 wt.% carbon black and is preferably free of carbon black.

The cable is preferably a low voltage cable (<6 kV) or a medium voltage cable (6 to 36 kV), more preferably a low voltage cable.

A medium voltage cable usually comprises conductor surrounded by an inner semiconductive layer, an insulating layer and an outer semiconductive layer.

A low voltage cable usually comprises conductor surrounded by at least an insulating layer.

The composition is preferably used in a cable, more preferably for a power cable and most preferably for a power cable for voltages below 1000V with a layer that has a colour in visible light. White is defined as a colour.

All documents cited herein are herewith incorporated by reference.

The present invention will be further illustrated by the examples described below.

### Methods and Examples

### Melt Flow Rate

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The MFR is determined at 190 °C for polyethylene. MFR may be determined at different loadings such as 2.16 kg (MFR₂) or 21.6 kg (MFR₂₁).

### Density

Low density polyethylene (LDPE): The density was measured according to ISO 1183-2. The sample preparation was executed according to ISO 1872-2 Table 3 Q (compression moulding).

Low pressure process polyethylene: Density of the polymer was measured according to ISO 1183 /1872-2B.

### Hot set elongation test

Tape samples as prepared below in experimental part under "Tape sample preparation" were used to determine the hot set properties. Three dumb-bells sample, taken out along extrusion direction were prepared according to ISO527 5A from the 1.8 +/- 0.1 mm thick crosslinked tape. The hot set test were made according to EN60811-2-1 (hot set test) by measuring the thermal deformation.

Reference lines, were marked 20 mm apart on the dumb-bells. Each test sample was fixed vertically from upper end thereof in the oven and the load of 0.2 MPa are attached to the lower end of each test sample. After 15 min, 200°C in oven the distance between the pre-marked lines were measured and the percentage hot set elongation calculated, elongation %. For permanent set %, the tensile force (weight) was removed from the test samples and after recovered in 200°C for 5 minutes and then let to cool in room temperature to ambient temperature. The permanent set % was calculated from the distance between the marked lines The average of the three test were reported.

### Content (mol-%) of hydrolysable silane group(s) using X-ray fluorescence analysis:

The pellet sample was pressed to a 3 mm thick plaque (150°C for 2 minutes, under pressure of 5 bar and cooled to room temperature). Si-atom content was analysed by wavelength dispersive XRF (AXS S4 Pioneer Sequential X-ray Spectrometer supplied by Bruker). The pellet sample was pressed to a 3 mm thick plaque (150°C for 2 minutes, under pressure of 5 bar and cooled to room temperature).

Generally, in XRF- method, the sample is irradiated by electromagnetic waves with wavelengths 0.01-10 nm. The elements present in the sample will then emit fluorescent X-ray radiation with discrete energies that are characteristic for each element. By measuring the intensities of the emitted energies, quantitative analysis can be performed. The quantitative methods are calibrated with compounds with known concentrations of the element of interest e.g. prepared in a Brabender compounder.

The XRF results show the total content (wt%) of Si and are then calculated as wt% of cross-linkable silicon-containing groups , e.g. R¹SiR²_{q}Y_{3-q}.

### Content of the polar and alpha-olefin comonomer

Comonomer content (wt.%) of the polar comonomer was determined in a known manner based on Fourier transform infrared spectroscopy (FTIR) determination calibrated with ¹³C-NMR as described in Haslam J, Willis HA, Squirrel DC. Identification and analysis of plastics, 2nd ed. London Hiffe books; 1972. FTIR instrument was a Perkin Elmer 2000, 1scann, resolution 4cm⁻¹. The peak for the used comonomer was compared to the peak of polyethylene as evident for a skilled person (e.g. the peak for butyl acrylate at 3450 cm⁻¹ was compared to the peak of polyethylene at 2020 cm⁻¹). The wt.% was converted to mol% by calculation, based on the total moles of polymerisable monomers.

An alternative method to determine polar as well as the alpha-olefin comonomer content is to use NMR-method which would give equal results to above X-ray and FTIR method, i.e results would be comparable to purposes of the invention:

The comonomer content was determined by using ¹³C -NMR. The ¹³C-NMR spectra were recorded on Bruker 400 MHz spectrometer at 130 °C from samples dissolved in 1,2,4-trichlorobenzene/benzene-d6 (90/10 w/w).

### Exudation of additives

Pellets (100g) of said polymer is added to a beaker followed by methanol (100 ml). The mixture is allowed to slowly stir, using a magnetic stirrer, for 5 minutes. 5 ml of the solution is added to a vial and analyzed by HPLC chromatography.

### EXAMPLES

### Components used

### EVS

ethylene-vinyl-trimethoxy silane-copolymer produced in a high-pressure tubular reaction process, having a VTMS content of 1.35 wt.% an MFR₂ (ISO 1133, 190°C, 2.16 kg) of 1.0 g/10 min and a density of 923 kg/m³.

### LDPE

low density PE (LDPE) homopolymer with an MFR₂ (ISO 1133, 190°C, 2.16 kg) of 2.0 g/10 min and a density of 922 kg/m³.

### Polyone 2000-WT-50

A white colorant commercial available under trade name Polyone 2000-WT-50, (supplied by PolyOne Sweden AB). It contains pigment and additives that is known to impair the sulphonic acids as condensation catalyst.

### DDBSA

Dodecylbenzenesulphonic acid,

### Silica

Perkasil 408 PD, a precipitated silica with a high surface area and a fine particle size. obtained from Grace Davison, W. R. Grace & Co.-Conn.

### Ralox LC

An antioxidant which is a butylated reaction product of p-cresol and dicyclopentadiene (CAS-no. 68610-51-5),
- HDTMS: hexadecyl trimethoxy silane

### Compounding of the catalyst masterbatches (inventive and comparative examples)

The catalysts masterbatches were compounded using a BUSS AG co-kneader type PR46B-11D/H1 (50mm screw) with the concentrations shown in table 1 below. As carrier polymer an ethylene-butyl acrylate-compolymer produced in a high-pressure tubular process having a butyl acrylate content of 17 wt.%, an MFR₂ (ISO 1133, 190°C, 2.16 kg) of 7.0 g/10 min and a density of 924 kg/m³ has been used.

| Table 1 | DDBSA % | Stearic acid % |
|---|---|---|
| Reference example 1 | 1.5 | 0 |
| Inventive example 2 | 1.5 | 3 |
| Inventive example 3 | 1.5 | 6 |
| Reference example 4 | 4.3 | 0 |
| Inventive example 5 | 3.9 | 3 |
| Inventive example 6 | 3.7 | 6 |

### Compounding of the compositions

Tape samples containing 94 parts per weight of EVS, 5 parts per weight of the respective catalyst masterbatch and 1 part by weight of Polyone 2000-WT-50 were prepared by meltmixing in a tape extruder (Collin Teach-Line Extruder, Type: E 20 T SCD 15 having the following settings.

| Set Values Temperature [°C] | | | | | | Extruder | |
|---|---|---|---|---|---|---|---|
| Zone | | | | | | Speed | Output |
| 1 | 2 | 3 | 4 | 5 | 6 | [rpm] | [kg/h] |
| 60 | 150 | 160 | 170 | 170 | 170 | 30 | 0.8 |

The obtained tape samples (with 1.8 +/- 0.1 mm in thickness) were used for crosslinking and for determining gel content and hot set elongation.

Crosslinking of inventive compositions was effected in two different conditions: either the obtained tape sample was kept in water bath at 90 °C or in ambient conditions, at 23 °C and 50% relative humidity, and let crosslinking to occur for different time periods as specified in table 2 below. Accordingly, hot set elongation was measured after crosslinking 24 h in water bath at 90 °C and after 7 days and 14 days in ambient conditions at 23 °C.

| Table 2 | Hot set elongation | | |
|---|---|---|---|
| | 23 °C/24 h | 90 °C/7 days | 23 °C/14 days |
| Reference example 1 | Breaks | 203 | 144 |
| Inventive example 2 | Breaks | 61 | N/A |
| Inventive example 3 | Breaks | 38 | 56 |
| Reference example 4 | 101 | 25 | N/A |
| Inventive example 5 | 70 | 35 | N/A |
| Inventive example 6 | Breaks | 24 | 35 |

The improved hot set elongation of inventive examples 2 and 3 compared with reference example 1 (after 7 days in ambient conditions) show that the catalytic effect is increased by adding carboxylic acid.

Inventive examples 5 and 6 demonstrate that the amount of dodecyl benzene sulphonic acid can be reduced when adding carboxylic acid while obtaining similar or even improved hot set elongation.

In a second test catalyst masterbatches having the contents as given in table 3 were compounded and crosslinked as outlined above

| Table 3 | DDBSA % | Stearic acid % | Silica % |
|---|---|---|---|
| Reference example 7 | 1.5 | 0 | 0 |
| Inventive example 8 | 3.7 | 6 | 0 |
| Inventive example 9 | 3.8 | 6 | 1 |
| Reference example 10 | 4.3 | 0 | 0 |
| Reference example 11 | 2.2 | 0 | 2 |

### Compounding of the compositions

Tape samples containing 94 parts per weight of EVS, 5 parts per weight of the respective catalyst masterbatch and 1 part by weight of Polyone 2000-WT-50 were prepared by meltmixing in a tape extruder (Collin Teach-Line Extruder, Type: E 20 T SCD 15 as outlined above.

| Table 4 | Hot set elongation 90°C/24h | Hot set elongation 23°C/7days |
|---|---|---|
| Reference example 7 | Breaks | 203 |
| Inventive example 8 | Breaks | 24 |
| Inventive example 9 | 46 | 24 |
| Reference example 10 | 101 | 25 |
| Reference example 11 | 102 | 86 |

Inventive examples 8 and 9 demonstrate that after 7 days under ambient conditions the same hot set elongation, i.e. the same cross-linking degree can be obtained. However, by the addition of small amounts of silica cross-linking at elevated temperatures enabled.

In a third test catalyst masterbatches having the contents as given in table 5 were compounded as outlined above.

| table 5 | RE 12 | IE 13 | RE 14 | IE 15 |
|---|---|---|---|---|
| HDTMS | 1 | 1 | 1 | 1 |
| LE1800 | 89.5 | 88.5 | 89.1 | 88.1 |
| RALOX LC | 8 | 8 | 8 | 8 |
| DDBSA | 1.5 | 1.5 | 1.9 | 1.9 |
| Silica | | 1 | | 1 |
| exudation 1 month | | | | |
| DDBSA ppm | 501 | 364 | 912 | 489 |
| Ralox LC ppm | 1500 | 736 | | |

| | | | | |
|---|---|---|---|---|
| RE reference example; IE inventive example | | | | |

The above results show that the exudation of DDBSA and also phenolic antioxidant (Ralox LC) from the catalyst masterbatch is significantly reduced by the presence of silica.

## Claims

1. A catalyst masterbatch for cross-linking a polyolefin comprising cross-linkable silicon-containing groups, such as hydrolysable silane containing groups, the catalyst masterbatch comprising
- a sulphonic acid and/or sulphonic anhydride;
- carboxylic acid groups and/or carboxylic anhydride groups ; and
- a carrier comprising a polyolefin.
wherein the weight ratio between the sum of the weight of sulphonic acids and sulphonic acid anhydrides and the sum of the weight of carboxylic acid groups and carboxylic acid anhydride groups is between 30 to 0.6.

2. The catalyst masterbatch according to claim 1, wherein the sum of the amounts of sulphonic acids and sulphonic acid anhydrides is 15 wt.% or less based on the total weight of the catalyst masterbatch.

3. The catalyst masterbatch according to any one of the preceding claims, wherein the sum of the weights of carboxylic acid groups and carboxylic acid anhydride groups is 0.24 wt.% or more based on the total weight of the catalyst masterbatch.

4. The catalyst masterbatch according to any one of the preceding claims, wherein sum of the weights of sulphonic acids, sulphonic acid anhydrides, carboxylic acid groups and carboxylic acid anhydride groups is between 1.0 wt.% and 15.0 wt.% based on the total weight of the catalyst masterbatch .

5. The catalyst masterbatch according to any one of the preceding claims, wherein the carboxylic acid contains the following structural element (I)
HOOC-R¹ (I)
wherein R₁ is a C₅ to C₁₀₀ hydrocarbyl group, optionally containing heteroatoms.

6. The catalyst masterbatch according to any one of the preceding claims, wherein the carboxylic acid and/or carboxylic acid anhydride is physically mixed with the carrier, the sulphonic acid and/or sulphonic acid anhydride and, optionally further components.

7. The catalyst masterbatch according to any one of the preceding claims, wherein the sulphonic acid comprises the structural element (II)
aromatic organic sulphonic acid comprising the structural element (II)
Ar(SO₃H)ₓ (II)
with Ar being an aryl group which may be substituted or non-substituted, and x being at least 1.

8. The catalyst masterbatch according to claim 7 wherein the sulphonic acid is selected from the following compounds:
(iv) an alkylated naphthalene monosulfonic acid substituted with 1 to 4 alkyl groups wherein each alkyl group is a linear or branched alkyl with 5 to 40 carbon atoms with each alkyl group being the same or different and wherein the total number of carbon atoms in the alkyl groups is in the range of 10 to 80 carbon atoms;
(v) an arylalkyl sulfonic acid wherein the aryl group is phenyl or naphthyl and is substituted with 1 to 4 alkyl groups wherein each alkyl group is a linear or branched alkyl with 5 to 40 carbon atoms with each alkyl group being the same or different and wherein the total number of carbon atoms in the alkyl groups is in the range of 12 to 80;
(vi) an alkylated aryl disulfonic acid selected from the group consisting of the structure (III): 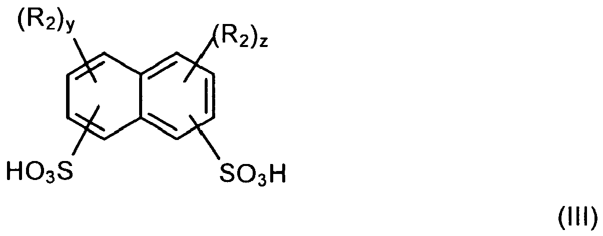 or the structure (IV): 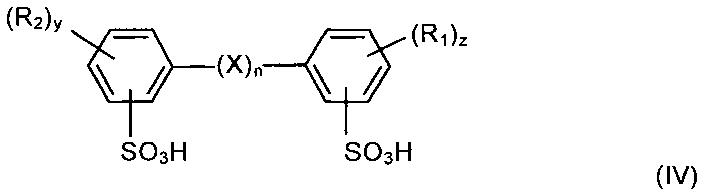 wherein each of R¹ and R² are the same or different and is a linear or branched alkyl group with 6 to 16 carbon atoms, y is 0 to 3, z is 0 to 3 with the proviso that y + z is 1 to 4, n is 0 to 3, X is a divalent moiety selected from the group consisting of -C(R³)(R⁴)-, wherein each of R³ and R⁴ is H or independently a linear or branched alkyl group of 1 to 4 carbon atoms and n is 1; -C(=O)-, wherein n is 1; -S-, wherein n is 1 to 3 and - S(O)₂-, wherein n is 1.

9. The catalyst masterbatch according to claim 10, wherein the sulphonic acid is selected from compounds of group (ii).

10. The catalyst masterbatch according to claim 11, wherein, in the sulphonic acid of group (ii), the aryl group is phenyl and is substituted with 1 to 2 alkyl groups wherein each alkyl group is a linear or branched alkyl with 8 to 25 carbon atoms with each alkyl group being the same or different and wherein the total number of carbon atoms in the alkyl groups is in the range of 12 to 40.

11. The catalyst masterbatch according to any one of the preceding claims, further comprising
- silica and/or filler.

12. A polyolefin composition comprising
- a sulphonic acid and/or sulphonic anhydride;
- a carboxylic acid groups and/or carboxylic acid anhydride groups; and
- a polyolefin comprising cross-linkable silicon-containing groups wherein the weight ratio between the sum of the weight of sulphonic acids and sulphonic acid anhydrides and the sum of the weight of carboxylic acid groups and carboxylic acid anhydride groups is between 30 to 0.6.

13. The polyolefin composition according to claim 12, further comprising
- a pigment.

14. Use of the catalyst masterbatch according to any one of the preceding claims 1 to 10 for cross-linking a polyolefin composition comprising
- a polyolefin having cross-linkable silicon-containing groups.

15. Use of the masterbatch according to any one of the preceding claims 1 to 10 in a cable layer.
